# DEMANDE DE BREVET EUROPEEN

(11) **EP 0 732 601 A1**
(43) Date de publication de la demande: **18.09.1996**
(21) Numéro de dépôt: 96400508.6
(22) Date de dépôt: 12.03.1996
(51) Int. Cl.: G01V 3/15

(54) **Capteur de veille à grande autonomie**

(30) Priorité: 14.03.1995 FR 9502924
(71) Demandeur: TDA ARMEMENTS S.A.S., 45240 La Ferté Saint Aubin (FR)
(72) Inventeur: Avignon, Bruno, 92402 Courbevoie Cedex (FR); Blouet, Christophe, 92402 Courbevoie Cedex (FR)
(74) Mandataire: Chaverneff, Vladimir

(57) **Abrégé**

Le capteur de l'invention comporte un transducteur (1) à trois éléments magnéto-résistifs (2 à 4) insérés chacun dans un pont de Wheatstone suivi d'un circuit détecteur et de traitement de signal (10 à 14). Les éléments électriques ou électroniques sont alimentés périodiquement pendant une faible partie du temps (8, 9) par une pile (6). Ce capteur détecte le passage de masses métalliques importantes (véhicules) par mesure de la perturbation locale du champ magnétique.

## Description

La présente invention se rapporte à un capteur de veille à grande autonomie.

De nombreux dispositifs électriques et/ou électroniques comportent leur propre alimentation en énergie, la plupart du temps par piles électriques. Parmi ces dispositifs, certains, tels que des dispositifs de surveillance ou de balisage doivent, ou ne peuvent que fonctionner pendant de longues périodes sans intervention humaine. Il est donc nécessaire que la source d'énergie électrique de ces dispositifs fonctionne de façon sûre le plus longtemps possible. Une telle exigence est relativement facile à satisfaire lorsque les dispositifs en question ont une très faible consommation. Par contre, lorsque la consommation des dispositifs autonomes est relativement élevée, au moins pendant certaines périodes, par exemple entre deux périodes de veille, on est amené à les munir d'une source d'alimentation à grande capacité, donc volumineuse, ce qui n'est pas toujours possible, ou en tout cas difficile à réaliser.

Les mines, telles que les mines anti-véhicules actuelles font partie des dispositifs ayant une grande consommation d'énergie électrique, en particulier celles possédant des circuits de traitement de signal sophistiqués. L'adjonction de récepteurs de télécommande sur certains types de ces mines accroît encore nettement leur consommation en énergie. Ces exigences sont d'autant plus difficiles à satisfaire que la "durée de mission" de ces mines est longue (jusqu'à un an) et que dans certains cas leurs conditions climatiques d'emploi sont sévères, ne permettant pas alors de les exploiter au maximum de leur capacité.

D'autre part, la mine étant un objet abandonné sur le terrain, il est souvent souhaitable qu'elle soit piégée pour en rendre plus difficile la récupération manuelle. Ce piégeage, pour être efficace, doit être actif en permanence et être suffisamment "intelligent" pour discriminer une action manuelle de récupération du passage d'une cible.

Dans le domaine des mines anti-véhicules à influence connues, on utilise généralement des dispositifs différents pour assurer leur déclenchement au passage d'une cible et pour assurer le piégeage qui est commandé par un capteur particulier. On connaît par exemple des mines à détecteurs au mercure qui les déclenchent lors de toute modification de leur assiette après leur mise en service. De tels détecteurs sont onéreux et ne se déclenchent que pour un angle relativement important de déplacement des mines, du fait que celles-ci doivent pouvoir être posées sur des terrains en pente, ce qui a pour conséquence soit d'ajouter une contrainte d'angle au système de pose, soit de laisser un très grand degré de liberté lors du relevage, ce qui diminue l'efficacité du piégeage.

Par conséquent, selon les techniques connues, lorsque l'on désire assurer à une mine du type anti-véhicule une fonction de piégeage élaborée et une durée de mission longue, il faut lui adjoindre une source d'énergie de grande capacité, ce qui en augmente nettement le prix de revient et l'encombrement. Il en va de même pour d'autres dispositifs autonomes devant assurer en période de veille des fonctions différentes de leur fonction principale, par exemple des fonctions de surveillance entre des périodes de veille.

La présente invention a pour objet un capteur de veille à grande autonomie du type à source d'énergie électrique autonome et limitée, détectant des masses métalliques ferromagnétiques en mouvement qui consomme le minimum possible d'énergie et qui puisse déterminer de façon simple et fiable toute tentative non autorisée de le déplacer. La présente invention a également pour objet une mine comportant un tel capteur.

Le capteur conforme à l'invention comporte un transducteur à au moins un élément magnéto-sensible relié à un circuit détecteur numérique, l'élément magnéto-sensible et le circuit détecteur étant alternativement alimentés et non alimentés par la source d'énergie électrique, les temps d'alimentation étant nettement plus petits que les temps sans alimentation.

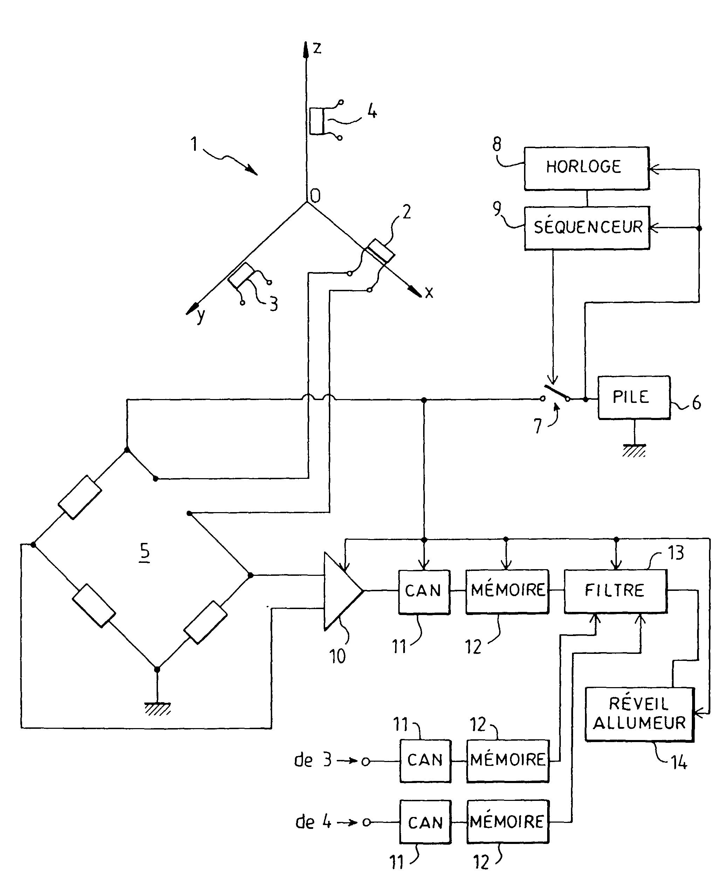

La présente invention sera mieux comprise à la lecture de la description détaillé d'un mode de réalisation, pris à titre d'exemple non limitatif et illustré par le dessin annexé dont la figure unique est un bloc-diagramme d'un capteur conforme à l'invention.

L'invention est décrite ci-dessous en référence à une mine anti-véhicules, mais il est bien entendu qu'elle n'est pas limitée à une telle application, et qu'elle peut être mise en oeuvre dans différents domaines où l'on recherche une grande autonomie pour des dispositifs qui ne doivent pas être déplacés ou dont l'on veut connaître les déplacements et/ou qui doivent fonctionner discrètement, et/ou qui doivent détecter des masses ferromagnétiques en mouvement.

Dans le cas de mines ou dispositifs présentant les mêmes caractéristiques et/ou exigences, on utilise de façon intermittente un détecteur dont la réaction puisse permettre une reconnaissance soit de la cible en période de veille, avec gestion de la consommation en énergie électrique, soit de la tentative de récupération manuelle pour en assurer le piégeage. Parmi les détecteurs connus, en particulier ceux déjà employés pour réaliser la fonction de détection de véhicules, on peut citer :
- les capteurs sismiques, mais ils discriminent très mal les tentatives de récupération manuelle par rapport à d'autres influences extérieures, d'autant plus que le relevage se fait de manière très délicate.
- les capteurs à infrarouges, qui sont réservés aux mines non enfouies. De tels capteurs sont également utilisés pour assurer la surveillance de locaux contre l'intrusion. L'installation de tels capteurs est particulièrement délicate, car leur portée doit être adaptée à leur environnement proche d'utilisation. Cette contrainte de pose réserve de tels capteurs à de mines posées manuellement. De plus, la détection des cibles nécessite un traitement de signal sophistiqué incompatible avec l'impératif de diminuer la consommation en énergie, car la discrimination entre le passage d'un animal et celui d'un soldat venant récupérer la mine ne peut se faire avec des moyens simples.
- les capteurs électromagnétiques actifs, du type de ceux utilisés pour la détection d'intrusions dans des locaux, pourraient être utilisés avec des mines non enfouies en présentant des caractéristiques acceptables du point de vue de la consommation, mais eux non plus ne peuvent se contenter de moyens de traitement de signal simples et peu gourmands en énergie pour discriminer par exemple des animaux d'humains.
- les capteurs acoustiques nécessitent également un traitement de signal sophistiqué pour discriminer un bruit dû à une tentative de récupération ou au passage d'un véhicule de bruits naturels parasites tels que ceux dus au passage d'animaux, à la grêle ou à la pluie.

Pour ne pas avoir recours à de tels capteurs nécessitant un traitement de signal sophistiqué, la présente invention met en oeuvre un capteur réalisant intrinsèquement la discrimination entre les cibles et les différents parasites qui ne doivent pas entraîner le déclenchement de l'allumeur de la mine. Ainsi, les circuits de détection reliés à ce capteur peuvent être très simples, et donc consommer très peu d'énergie. De plus, ce capteur doit être suffisamment sensible pour rendre quasiment impossible toute tentative non autorisée d'enlèvement de la mine.

Le capteur conforme à l'invention est un capteur magnétique suffisamment sensible pour détecter tout déplacement, même minime (quelques centimètres) de la mine à laquelle il est incorporé. De façon avantageuse, ce capteur comporte un transducteur à trois éléments magnéto-sensibles, à raison d'un par axe de coordonnées cartésiennes. De façon avantageuse, ces éléments magnéto-sensibles sont des magnéto-résistances. De tels éléments permettent de mesurer la composante locale du vecteur champ magnétique terrestre dans une large bande de fréquences (0 à 1 MHz environ), et, à partir de cette mesure, de détecter les véhicules passant à proximité par l'effet perturbateur, dû à leur masse métallique, sur le champ magnétique local. Les variations du champ magnétique terrestre étant peu soumises à des influences naturelles, (glissements de terrain, orages magnétiques...), le capteur de l'invention ne produit pas, ou un nombre négligeable de fausses alarmes vis-à-vis de telles influences.

Bien qu'un capteur magnéto-résistif ait une consommation en énergie relativement élevée, la présente invention permet, grâce à une autre caractéristique importante, de réduire la quantité d'énergie consommée pendant la durée d'utilisation autonome de la mine en n'alimentant ce capteur que pendant de courts laps de temps, de façon cyclique, le rapport, désigné ci-après par rapport cyclique, entre la durée de chaque laps de temps pendant lequel le capteur est alimenté ("veille active") et celle du laps de temps suivant, pendant lequel il n'est pas alimenté, pouvant être compris entre 1/10 et 1/1 00 ou moins (1/1000 ou moins par exemple). Bien entendu, la durée des laps de temps d'alimentation du capteur est sensiblement égale au temps nécessaire pour traiter, de la façon décrite ci-dessous, le signal issu des éléments magnéto-résistifs, et la durée des laps de temps pendant lesquels le capteur n'est pas alimenté est inférieure ou égale au temps mis par un véhicule rapide (roulant par exemple à une vitesse de 80 à 100 Km/h) se dirigeant vers la mine pour parcourir la distance séparant le point où il commence à pouvoir être détecté par le capteur de l'invention d'un point situé à proximité de la mine (par exemple 0,5 à 1 m de la mine), afin de ménager un préavis suffisant aux circuits de traitement de la mine. Ce préavis doit permettre aux circuits de traitement de déterminer avec la meilleure certitude possible (si nécessaire après plusieurs vérifications) si la cible détectée est bien un véhicule (c'est-à-dire une masse métallique mobile).

Sur la figure, on a représenté un transducteur 1 comportant trois éléments magnéto-résistifs 2, 3 et 4. Ces éléments sont disposés parallèlement à trois axes de coordonnées cartésiennes Ox, Oy et Oz, l'ensemble de ces trois axes de coordonnées pouvant être orienté de façon quelconque par rapport à des repères géographiques. Pour simplifier le dessin, on n'a représenté que le circuit de traitement relié à l'élément 2, les circuits reliés aux autres éléments étant identiques.

L'élément 2 est relié à un pont de Wheatstone 5 qui est alimenté par la pile 6 via un interrupteur commandé 7. En variante, l'élément 2 peut comporter quatre magnéto-résistances branchées en pont, comme par exemple décrit dans la notice Philips des capteurs KMZ 10. Le pont 5 est alors supprimé, et la sortie de l'ensemble des quatre magnétorésistances est directement reliée à l'amplificateur 10. La pile 6 alimente en permanence une horloge 8 (par exemple un oscillateur à quartz) suivie d'un séquenceur 9. Seuls les éléments 8 et 9 sont alimentés en permanence par la pile 6, mais leur consommation est très faible, et n'influe donc que de façon négligeable sur la durée de vie de cette pile. Le séquenceur 9 est programmé de façon à délivrer des impulsions ayant un rapport cyclique d'environ 1/100, la durée "utile" (c'est-à-dire celle pendant laquelle elles commandent les périodes actives du capteur) étant par exemple d'environ 200 µs.

La sortie du pont de mesure 5 est reliée à un circuit de traitement comprenant respectivement: un amplificateur 10, un convertisseur analogique-numérique 11, une mémoire 12 et un filtre 13. La sortie du filtre 13 est reliée à une entrée d'un circuit 14 de réveil de l'allumeur (non représenté) de la mine. Les deux autres entrées du circuit 14 sont reliées chacune à la sortie d'un circuit de traitement (non représenté et comportant des éléments respectivement identiques aux éléments 10 à 13) relatif respectivement à l'élément magnétorésistif 3 et à l'élément 4. Le circuit 14 assure le réveil de l'allumeur (partie électronique existante de la mine). Le filtre 13 comporte, de façon non représentée en détail, des circuits assurant la pondération des signaux issus des éléments 2, 3 et 4, ce qui permet le déclenchement de l'allumeur si une variation significative de la composante locale du champ magnétique, c'est-à-dire la présence d'une masse métallique mobile, ou bien une tentative non autorisée d'enlèvement de la mine. Bien entendu, le circuit 14 comporte des circuits de traitement de signal sophistiqué, de type connu en soi, permettant par exemple de discriminer des véhicules légers de véhicules lourds tels que des chars d'assaut.

Le séquenceur 9, de type programmable de préférence, détermine, à partir des impulsions d'horloge fournies par l'horloge 8, le rapport cyclique précité, et commande donc, pendant lesdites périodes de "veille active" l'alimentation du capteur 5 et des éléments 10 à 14 par la pile 6.

La mémoire 12 a une capacité suffisante pour mémoriser les signaux produits par le capteur 5 pendant au moins deux périodes de veille active consécutives. Elle fournit à chaque période de veille active au filtre 13 la valeur courante arrivant à ce moment du capteur 5 et la valeur précédente. En variante, la mémoire fournit, en plus de la valeur courante, deux ou plusieurs valeurs précédentes, afin d'améliorer la fiabilité de la comparaison. La comparaison effectuée par le filtre 13 en association avec la mémoire 12 permet, en plus de la détection de variations non négligeables du champ magnétique autour du capteur, de tenir compte de dérives lentes de ce champ magnétique et/ou de dérives lentes du transducteur. Pour économiser encore davantage l'énergie électrique, la pile 6 n'alimente pas en veille active le circuit 14 ainsi que l'allumeur tant que le filtre 13 ne détecte pas de variation significative des signaux arrivant à la mémoire 12. Le filtre 13 effectue, avant comparaison, des traitements numériques sur les signaux issus de la mémoire 12, par exemple des traitements de dérivation et/ou d'intégration de courte durée (durée courte par rapport à l'évolution des mobiles ou des phénomènes à surveiller: par exemple pour des véhicules tels que des chars, la durée d'intégration est de l'ordre du dixième de seconde ou moins), et/ou de convolution et/ou de corrélation, afin d'en éliminer le maximum possible de parasites. Un tel filtre peut, par exemple, comporter jusqu'à 1 000 portes, et être réalisé en ASIC, en présentant une consommation très faible (environ 50 µA par exemple).

Avec les circuits et composants actuellement disponibles, la consommation de l'horloge 8 et du séquenceur 9 est de 15 µA environ, alors que celle de l'ensemble des circuits du capteur est d'environ 430 µA en valeur moyenne. On peut ainsi envisager un fonctionnement autonome de la mine pendant au moins 6 mois avec une pile d'une capacité de 4A.h, pour un taux de probabilité de fausses alarmes de deux par heure.

Le capteur de l'invention présente les avantages suivants :
- la sensibilité des éléments magnéto-résistifs est telle qu'elle permet de détecter un véhicule blindé environ 1 mètre avant son arrivée au-dessus de la mine, ce qui offre un temps suffisant aux circuits de traitement pour confirmer la présence de ce véhicule, même s'il roule rapidement (100 km/h ou plus) et déclencher la charge au bon moment.
- ce capteur détecte aussi bien les véhicules que les tentatives d'enlèvement non autorisées, et n'est sensible qu'à des parasites "naturels" très peu probables (glissements de terrain, orages magnétiques...) et présente ainsi un très faible taux de fausses alarmes,
- la fonction de détection peut être associée au paramètre temps, réalisant ainsi un filtre intégrateur, par exemple,
- les fonctions utilisées pour commander la veille du capteur (éléments 8 et 9) sont déjà utilisées dans des mines évoluées.

Seules les fonctions logiques (12 et 13) sont spécifiques au capteur de veille, et peuvent être facilement intégrées dans un ASIC, ce qui n'augmente que très peu le prix de la mine,
- le capteur est auto-adaptable au terrain: lors de la pose, la mine se trouve dans une situation particulière (champ magnétique local, inclinaison du terrain, orientation par rapport au Nord magnétique) qui est immédiatement prise en compte par le capteur à l'initialisation de la mémoire 12. Cette initialisation se fait simplement par mise à zéro de la mémoire 12 dès que la mine est à son emplacement définitif (après un délai de sécurité), le résultat de la première (ou des n premières) comparaison (s) étant inhibé.

Cette caractéristique permet d'éviter tout réglage coûteux en usine ou tout réglage sur le lieu de pose nécessitant un personnel qualifié, tout en augmentant sa fiabilité.

Le dispositif de l'invention peut également être disposé en configuration multistatique, c'est-à-dire une configuration comportant plusieurs capteurs répartis dans une zone géographique à surveiller.

Le capteur de l'invention peut être utilisé pour détecter le passage de véhicules autres que les véhicules terrestres: navires, sous-marins...II peut également être utilisé pour détecter le déplacement de tout objet auquel il est fixé: par exemple un tableau dans un musée ou une voiture automobile, auquel cas il est relié à un système d'alarme. Il peut également servir à des systèmes d'information sur le trafic routier ou ferroviaire (comptage de véhicules, déclenchement de feux de signalisation, ...), ou bien à mesurer des déformations de grandes surfaces métalliques (ailes d'avions par exemple).

## Revendications

1. Capteur de veille à grande autonomie alimenté par pile ou batterie, détectant des masses métalliques ferro-magnétiques mobiles, caractérisé en ce qu'il comporte un transducteur (1) à au moins un élément magnéto-sensible (2, 3 ou 4) relié à un circuit détecteur numérique (10 à 14), l'élément magnéto-sensible et le circuit détecteur étant alternativement alimentés et non alimentés par la pile (6), les temps d'alimentation étant nettement plus petits que les temps sans alimentation.

2. Capteur selon la revendication 1, caractérisé en ce que le rapport entre les temps d'alimentation et les temps sans alimentation est compris entre 1/10 et 1/100 environ.

3. Capteur selon la revendication 1 ou 2, caractérisé en ce que l'élément magnéto-sensible est une magnéto-résistance et qu'elle est insérée dans un pont de Wheatstone (5).

4. Capteur selon la revendication 1 ou 2, caractérisé en ce que l'élément magnéto-sensible comporte un ensemble de magnéto-résistances montées en pont de Wheatstone.

5. Capteur selon l'une des revendications précédentes, caractérisé en ce que le transducteur comporte trois éléments magnéto-sensibles (2, 3, 4) disposés parallèlement aux trois axes de coordonnées d'un repère cartésien (Oxyz).

6. Capteur selon l'une des revendications précédentes, caractérisé en ce que le circuit détecteur comporte un convertisseur analogique-numérique (11) suivi d'une mémoire numérique (12) et d'un filtre (13).

7. Capteur selon la revendication 6, caractérisé en ce que le filtre comporte l'une au moins des fonctions suivantes :pondération, comparaison, dérivation, intégration de courte durée, convolution, corrélation.

8. Capteur selon l'une des revendications précédentes, caractérisé en ce que le circuit détecteur est réalisé en ASIC.

9. Mine anti-véhicules, caractérisé en ce qu'elle comporte un capteur de veille selon l'une des revendications précédentes.
